# EUROPÄISCHE PATENTSCHRIFT

(11) **EP 1 852 642 B1**
(45) Veröffentlichungstag und Bekanntmachung des Hinweises auf die Patenterteilung: **02.12.2009**
(21) Anmeldenummer: 07007954.6
(22) Anmeldetag: 19.04.2007
(51) Int. Cl.: F16K 17/04

(54) **Sicherheitsventil**
Safety valve
Soupape de sécurité

(30) Priorität: 06.05.2006 DE 102006021169
(43) Veröffentlichungstag der Anmeldung: 07.11.2007
(73) Patentinhaber: Gerhard Götze KG, 71636 Ludwigsburg (DE)
(72) Erfinder: Wolpert, Gerhard, 72770 Reutlingen (DE)
(74) Vertreter: Fleck, Hermann-Josef

(56) Entgegenhaltungen:
- DE-A1- 2 113 268
- DE-U1- 7 734 368
- GB-A- 1 474 373
- US-A- 2 226 732
- US-A- 6 123 515
- US-A1- 2004 060 600

## Beschreibung

Die Erfindung bezieht sich auf ein Sicherheitsventil zum Abbau eines eine vorgegebene Schwelle übersteigenden Überdrucks über mindestens eine zur umgebenden Atmosphäre führende Ausströmöffnung mit einem dichtend an einem Überdruckraum anbringbaren, einen Ventilsitz aufweisenden Ventilgehäuse und einer mit diesem lösbar mittels eines Gewindes und eines Gegengewindes verbundenen Ventilhaube, in der ein mit definierter Gegenkraft gegen den Ventilsitz gedrückter Ventilkegel in einer Axialführung verschieblich an einem Führungsglied gehalten ist.

Nach dem Oberbegriff des neuen Anspruchs 1 geht die Erfindung von einem Sicherheitsventil aus, wie es in der US 2004/0060600 A1 angegeben ist. Bei diesem bekannten Sicherheitsventil wird zwischen einem Ventilsitz und einem gegen diesen mittels Federkraft gedrückten Ventilkegel bei einem gegen die Feder wirkenden Überdruck ein Strömungsweg zu einer Ausströmöffnung freigegeben. Die Ausströmöffnung befindet sich seitlich in einer Ventilhaube, die in diesem Bereich in ihrem Umfang erweitert ist. Die Ventilhaube ist in ihrem unteren Bereich mit einem eingeschraubten gehäuseartigen Einsatz versehen, der seinerseits in einen Anschluss eines bezüglich des Überdrucks zu überwachenden Behälters eingeschraubt ist. In die Ausströmöffnung in der Ventilhaube ist mittels eines Gewindes eine Auslassleitung eingeschraubt.

Die DE 2 113 268 A1 zeigt ein Druckventil zum Begrenzen eines Drucks in einem Druckmittelkreislauf und zum Erzeugen eines Druckgefälles zwischen zwei Kreisläufen mit einem Gehäuse, welches mindestens je einen Einlass und Auslass sowie mindestens einem Durchgangzwischeneinlass und -auslass versehen ist, welcher einen Ventilsitz aufweist. Auf dem Ventilsitz ist eine Platte als Schließkörper mittels einer Vorspanneinrichtung angedrückt. Der Auslass ist mittels einer Querbohrung in einem haubenartigen Ventilgehäuse gebildet, der mit einem Anschluss axial etwa in Höhe des Ventilsitzes versehen ist. Das Ventilgehäuse ist auch hierbei im Bereich des Auslasses in seinem Umfangsbereich nach außen aufgeweitet.

Ein ähnlicher Ventil mit federvorgespanntem, gegen einen Ventilsitz gedrückten Ventilkegel ist auch in der GB 1 474 373 A gezeigt, wobei ebenfalls in einer Ventilhaube eine radialseitige Abströmöffnung mit nach außen geführtem Abströmkanal gebildet ist, der von der Außenwandung der Ventilhaube absteht. Der Ventilsitz ist an einem in die Ventilhaube ragenden, in diese eingedrehten Einsatz ausgebildet.

Bei einem in der US 6 123 515 gezeigten weiteren Sicherheitsventil ist in einen unteren gehäuseartigen Abschnitt ein Ventileinsatz eingesetzt, der an seinem vordersten Randbereich einen Ventilsitz bildet, gegen den ein federbelasteter, in einer kurzen Ventilhaube axial verschiebbarer plattenförmiger Ventilkegel geführt ist. Im Umfangsbereich der Ventilhaube, axial von dem Ventilsitz zumindest um die Stärke des Ventilkegels versetzt sind umfangsseitig in der Wandung der Ventilhaube mehrere Ausströmöffnungen angeordnet. Ein Ventslschaft, der über ein Zwischenelement auf den Ventilkegel einwirkt, ist in seinem oberen Bereich gegenüber einer in einem Abschlusselement der Ventilhaube angebrachten Bohrung mittels eines O-Rings gedichtet.

Ein weiteres Sicherheitsventil ist in der DE 77 34 368 U1 angegeben. Bei diesem bekannten Sicherheitsventil wird ein Ventilgehäuse in Form eines Gehäuseunterteils mit einem Hochdruckstutzen an einen Hochdruckraum angeschlossen, und ein Strömungsweg in einen drucklosen Raum ist mittels eines mit Federkraft auf einen Ventilsitz gedrückten tellerförmigen Ventilkegels bei normalen Druckverhältnissen gesperrt, wird aber durch Anheben des Ventiltellers in Folge eines eine vorgegebene Schwelle übersteigenden Drucks geöffnet, so dass sich der Druck in dem Hochdruckraum durch Ausstrom des den Druck erzeugenden Mediums in den drucklosen Raum abbaut. Der Ventilkegel ist an einem eine Axialführung bewirkenden Führungsglied in Form eines Ventilstößels angebracht, der in einem Führungsstück verschieblich geführt ist, welches in einem eine Haube bildenden Ventiloberteil angebracht ist. Zwischen dem Ventilunterteil und dem Ventiloberteil ist zur Abdichtung der Führungskomponenten gegenüber dem Medium eine Dichtmembran eingespannt, auf der auf der von dem Hochdruckraum abgewandten Seite ein topfförmiger Membranteller sitzt. Die Einspannung der Dichtmembran erfolgt an ihrem Außenrand, wozu in dem Hohlraum des Gehäuseunterteils ein Absatz gebildet ist, der mit der Stirnseite des Gehäuseoberteils zum Einspannen der Dichtmembran zusammenwirkt, wobei das Gehäuseoberteil mit dem Gehäuseunterteil verschraubt ist. In dem Gehäuseunterteil ist in dessen Hohlraum in axialer Richtung von dem Einspannrand der Dichtmembran in den Druckraum versetzt der Ventilsitz eingearbeitet. Dieser Aufbau erfordert eine relativ aufwändige Fertigung.

Ein weiteres Sicherheitsventil in Form eines Überdruckventils ist in der DE 698 07 273 T2 gezeigt. Hierbei ist ein Ventilsitz in der Tiefe eines röhrenförmigen Körpers ausgebildet, auf dem zur Abdichtung eines Strömungswegs ein mit einer Dichtung versehenes Dichtungsträgeretement federbelastet aufsitzt. Ein bewegliches Ventilelement weist einen zweiten Ventilsitz auf, wobei spezielle Führungselemente und eine sie schützende Dichtmembran nicht vorgesehen sind. Auch dieser Aufbau ist relativ aufwändig.

Die US 2 226 732 A zeigt ein Sicherheitsventil mit einer Ventilhaube, die mittels eines Deckels abgeschlossen ist, welcher gegenüber einem freien Rand der Ventilhaube einen Spalt frei lässt.

Der Erfindung liegt die Aufgabe zugrunde, ein Sicherheitsventil der eingangs genannten Art bereit zu stellen, das eine möglichst einfache Fertigung und Bearbeitung für eine sichere Funktionsweise ermöglicht.

Diese Aufgabe wird mit den Merkmalen des Anspruches 1 gelöst. Hierbei ist vorgesehen, dass die Ausströmöffnungen in der umlaufenden Wandung der Ventilhaube in einem in axialer Richtung bezüglich des Gegengewindes auf der Seite zu dem Ventilkegel anschließende Bereich der Ventilhaube in Umfangsrichtung versetzt in dem den Ventilsitz umgebenden Wandbereich der Ventilhaube eingebracht sind, dass die Ausströmöffnungen auf ihrer Außenseite von einem umlaufenden radial beabstandeten Luftleitblech umgeben sind, das mit einem zylindrischen Abschnitt, dessen Innendurchmesser an den Außendurchmesser der Ventilhaube angepasst ist, axial in Richtung von dem Ventilsitz weg außerhalb der Ausströmöffnungen an der Ventilhaube festgelegt ist, und auf seiner axial abgekehrten Seite außerhalb der Ausströmöffnungen einen kreisringförmigen umlaufenden Austrittspalt für das strömende Medium frei lässt und dass zwischen der Axialführung und dem Ventilkegel eine Dichtmembran in dem Hohlraum der Ventilhaube auf der von dem Gegengewinde axial abgewandten Seite der Ausströmöffnungen mittels Spannelementen eingespannt ist.

Da somit der Ventilsitz an dem vordersten Randbereich bzw. der Stirnseite ausgebildet ist, lässt sich dieser einfach und exakt herstellen und kontrollieren, und auch die Fertigung des gesamten Ventilgehäuses wird mit diesen Maßnahmen erleichtert, wobei sich die Ausströmöffnungen andererseits leicht an der Ventilhaube einbringen lassen. Auch kommt diese Ausbildung der Funktionsweise zu Gute. Dabei kann die Dichtmembran ohne diesbezügliche Vorkehrungen an dem Ventilgehäuse leicht angebracht und bei der Fertigung der Ventilhaube montiert werden, womit eine dauerhaft sichere Funktionsweise unterstützt ist.

Zu einer einfachen Herstellung tragen auch die Maßnahmen bei, dass die Ventilhaube aus einem Rohrstück zylindrischen Querschnitts gefertigt ist.

Dabei wird der Aufbau dadurch begünstigt, dass in dem Hohlraum der Ventilhaube auf einer Seite der Dichtmembran einstückig an der Hohlraumwandung oder mittels eines separaten, ortsfest eingesetzten Stückes eine umlaufende ringförmige Klemmfläche gebildet ist, gegen die der Außenrand der Dichtmembrane mittels eines auf deren anderer Seite angeordneten ringförmigen Gegenstückes festgeklemmt ist, wo bei zumindest das Gegenstück durch Einschrauben in ein in dem Hohlraum eingebrachtes Gewinde oder durch Abstützung mittels eines elastischen Sicherungsringes, der eine axial gegen den Außenrand der Dichtmembrane gerichtete Spannung bewirkt und in eine in die Hohlraumwandung eingearbeitete Ringnut eingesetzt ist, gegen den Außenrand der Dichtmembrane verspannt ist, welche mit einem ringförmigen Innenrand mit dem als Ventüstößel ausgebildeten Führungsglied oder mit dem Ventilkegel dicht verbunden ist.

Eine weitere vorteilhafte Maßnahme besteht dabei darin, dass das eingesetzte Stück einen auf der von dem Ventilkegel abgewandten Seite der Dichtmembran angeordneten Membranteller bildet.

Zu einem einfachen, gut funktionierenden Aufbau tragen des Weiteren die Maßnahmen bei, dass eine die Gegenkraft erzeugende Schraubenfeder auf einem auf der von dem Ventilkegel abgewandten Seite des eingesetzten Stücks in dem Hohlraum in axialer Richtung beweglich angeordneten separaten Federteller abgestützt ist, der mit dem Führungsglied axial unverschieblich verbunden ist, und dass die Schraubenfeder mit ihrem von dem Ventilkegel abgewandten Ende an einem in dem Hohlraum der Ventilhaube ortsfest angeordneten weiteren Federteller abgestützt ist.

Die Erfindung wird nachfolgend anhand von Ausführungsbeispielen unter Bezugnahme auf die Zeichnungen näher erläutert. Es zeigen:
- Fig. 1: ein Sicherheitsventil im Längsschnitt,
- Fig. 2: eine perspektivische Ansicht des Sicherheitsventils nach Fig. 1 und
- Fig. 3: ein dem Sicherheitsventil nach Fig. 1 ähnliches Sicherheitsventil im Längsschnitt und in einer vergrößerten Detailansicht.

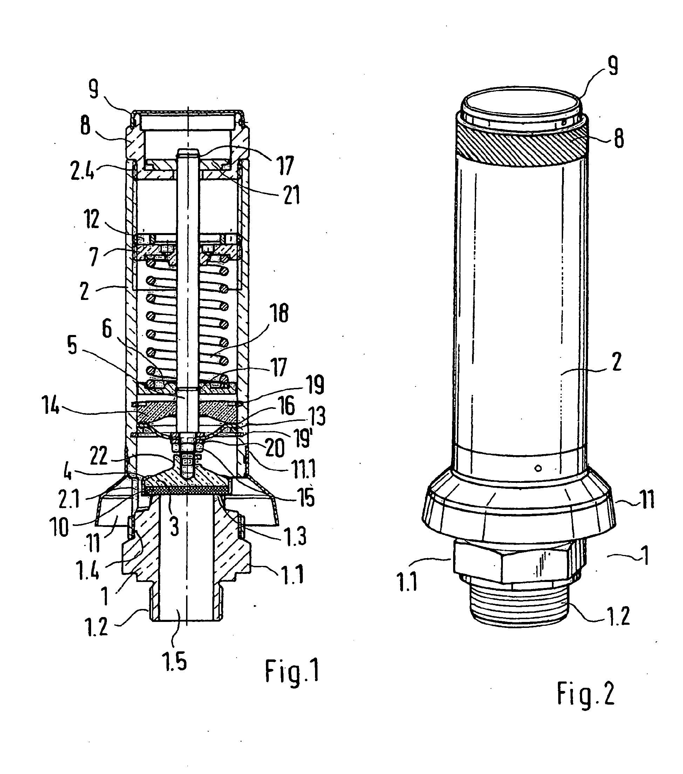

Das in Fig. 1 gezeigte Sicherheitsventil setzt sich aus einem Ventilgehäuse 1 und einer daran angeschraubten Ventilhaube 2 zusammen, die im Wesentlichen aus einem bearbeiteten zylindrischen Rohrstück besteht, an dessen von dem Ventilgehäuse 1 abgewandter Seite eine von einer Kappe 9 abgedecktes rändelmutterartiges Abschlussstück 8 angeschraubt ist. Das Ventilgehäuse 1 ist mittels eines Gewindes, und zwar vorliegend eines Außengewindes 1.2, an einem angepassten Gewinde eines (nicht gezeigten) Druckraums anschraubbar und besitzt einen Strömungskanal 1.5, um ein Druck erzeugendes Medium bei einem eine vorgegebene Druckschwelle überschreitenden Überdruck nach außen zu leiten, wobei der Strömungskanal im Normalfall im Bereich eines Ventilsitzes 1.3 mittels eines mit einer Dichtung 10 versehenen Ventilkegels 3 abgesperrt ist und bei einem die Schwelle überschreitenden Überdruck gegen eine mittels einer Feder 18 erzeugte Gegenkraft freigebbar ist.

Das Ventilgehäuse 1 und die zylindrische, rohrförmige Ventilhaube 2 sind koaxial zueinander angeordnet, wobei der Strömungskanal 1.5 ebenfalls koaxial in dem Ventilgehäuse 1 angeordnet ist. Der Ventilsitz 1.3 befindet sich an dem in das Innere der Ventilhaube 2 ragenden stirnseitigen vorderen Rand des Ventilgehäuses 1 und ist, wie auch der Strömungskanal 1.5, rotationssymmetrisch ausgebildet und wirkt mit der auf der zugekehrten, flach ausgebildeten Seite des tellerartigen Ventilkegels 3 dichtend zusammen. Zum einfachen Anschrauben an dem Druckraum, beispielsweise einem Überdruckbehälter, weist das Ventilgehäuse 1 einen Sechskant 1.1 auf, wie aus Fig. 2 ersichtlich.

Der Ventilsitz an dem stirnseitigen Rand des Ventilgehäuses 1 umgibt den Strömungskanal 1.5 und ist an diesen angrenzend nach außen etwas schräg abfallend geformt. Der Ventilsitz befindet sich dabei an einem Abschnitt des Ventilgehäuses 1, der einen geringeren Durchmesser besitzt, als der Innendurchmesser der Ventilhaube 2, so dass sich gegenüber der Innenseite der Ventilhaube 2 ein umlaufender ringförmiger Hohlraum zwischen dem Ventilgehäuse 1 und der Ventilhaube 2 ergibt. Der Ventilkegel kann auf diese Weise den gesamten Ventilsitz 1.3 überdecken, wobei eine ungehinderte axiale Bewegung des Ventilsitzes 1.3 gewährleistet ist. An den Abschnitt des Ventilgehäuses 1 mit dem geringeren Durchmesser schließt sich über einen entsprechenden nach außen gerichteten Absatz ein Abschnitt mit einem Gewinde in Form eines Außengewindes an, der an ein an dem Innenumfang des umgebenden Hohlraums der Ventilhaube 2 angeordnetes Innengewinde als Gegengewinde angepasst ist. Auf diese Weise kann das Ventilgehäuse 1 nicht nur einfach gefertigt, sondern auch einfach und sicher montiert werden. An das Außengewinde 1.4 schließt sich der Sechskant 1.1 an, der mit seiner (in den Fig.) oberen Seite einen bundartigen Anschlag zur zugekehrten Stirnseite der Ventilhaube 2 bietet und über den Außendurchmesser der Ventilhaube 2 etwas vorsteht.

Auf der von der Dichtseite abgewandten Seite ist an dem Ventilkegel 3 ein Ventilstö-ßel 5 angebracht, beispielsweise in eine Bohrung eingesetzt und mit einem Splint 22 oder einer Schraubverbindung festgelegt. Der Ventilstößel 5 ist koaxial innerhalb der Ventilhaube 2 angeordnet und zum Abheben des Ventilkegels 3 von dem Ventilsitz 1.3 innerhalb der Ventilhaube 2 unter Führung verschieblich gelagert. Die den Ventilstößel 5 umgebende Feder 18 ist an ihrem dem Ventilkegel 3 zugewandten unteren Ende und an ihrem von dem Ventilkegel 3 abgewandten oberen Ende an einem unteren bzw. oberen Federteller 6, 7 abgestützt, wobei der untere Ventilteller 6 an dem Ventilstößel 5 ortsfest angebracht und innerhalb des Hohlraumes der Ventilhaube 2 in axialer Richtung bewegbar ist, während der obere Ventilteller 7 ortsfest in dem Hohlraum der Ventilhaube 2 festgelegt ist, und zwar mittels eines Außengewindes an einem in die Hohlraumwandung eingebrachten Innengewinde. Der obere Federteller 7 ist mittels einer Kontermutter 12 gesichert und besitzt eine zentrale Bohrung oder ein in eine zentrale Aussparung eingesetztes Führungsstück mit einer zentralen Bohrung, in der der Ventilstößel 5 geführt ist. Auch in seinem dem Ventilkegel 3 zugewandten unteren Abschnitt ist der Ventilstößel in einer Führung verschieblich gelagert, die vorliegend in einem im Hohlraum der Ventilhaube 2 festgelegten Membranteller 14 ausgebildet ist.

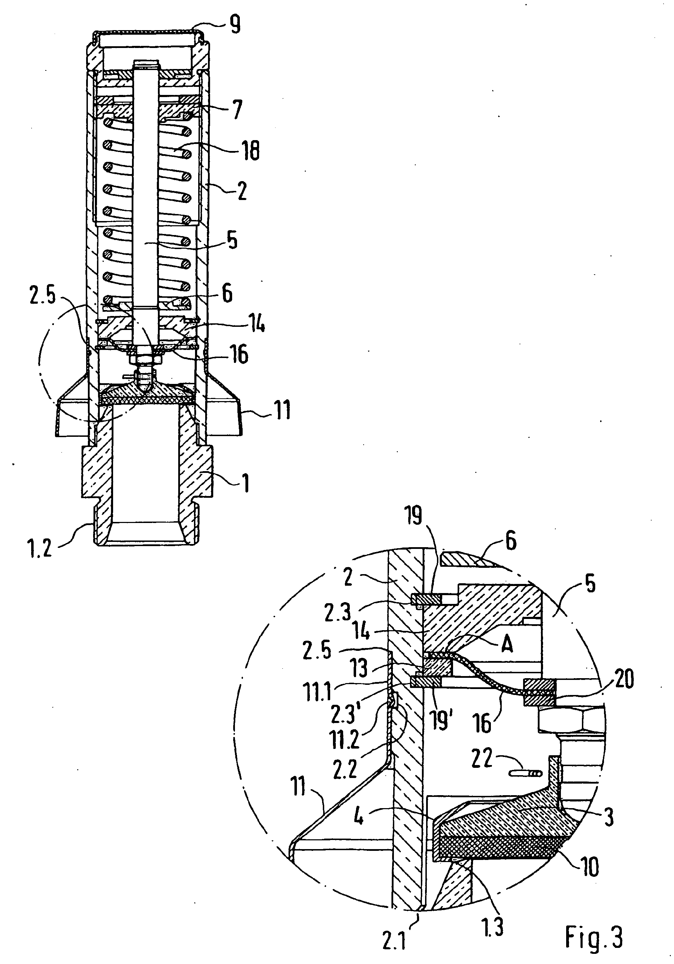

Zwischen dem Ventilkegel 3 und dem Führungsmechanismus des Ventilstößels 5 mit dem Führungsstück in dem oberen Federteller 7 und dem Führungsabschnitt in dem Membranteller 14 ist eine biegsame Dichtmembran 16 eingespannt, wie in Fig. 3 näher dargestellt. Hierzu ist die Dichtmembran 16 an ihrem Außenrandbereich flächig zwischen einem ringförmigen Abschnitt A des Membrantellers 14 auf ihrer von dem Ventilkegel 3 abgewandten Seite und mittels eines ringförmigen Gegenstückes 13 auf ihrer dem Ventilkegel 3 zugewandten Seite eingespannt. Die erforderlichen Spannkräfte werden mittels eines auf der zu dem Ventilkegel 3 gelegenen Seite des ringförmigen Gegenstückes 13 einerseits und mittels eines auf der von dem Ventilkegel 3 abgewandten Seite des Membrantellers 14 andererseits in der Hohlraumwandung der Ventilhaube 2 eingesetzten Sicherungsringes 19 bzw. 19' bewirkt. Die Sicherungsringe 19, 19' sind in jeweilige Ringnuten 2.3 bzw. 2.3' in der Hohlraumwandung eingesetzt und ragen aus diesen mit elastische Federkräfte in axialer Richtung erzeugenden Abschnitten in den Hohlraum vor, die das ringförmige Gegenstück 13 und den Membranteller 14 gegeneinander drücken, wodurch der Membranrand eingeklemmt und sicher gehalten wird. Alternativ zu diesem Einspannmechanismus der Dichtmembran 16 kann an der Hohlraumwandung auch ein Absatz eingearbeitet sein, gegen den der Membranrand flächig anliegt, und andererseits zum Festspannen eine Spannschraube in ein in der Hohlraumwandung ausgebildetes Gewinde eingeschraubt werden. Ferner ist eine Kombination eines in der vorstehenden Weise ausgebildeten und eingespannten Sicherungsringes mit einem in dieser Weise eingearbeiteten Absatz zum Einspannen der Dichtmembran 16 möglich. Auch eine Einspannung zwischen zwei in ein Gewinde der Hohlraumwandung eingeschraubte Spannelemente ist möglich.

Der Ventilteller 14 ist auf seiner dem Ventilkegel 3 zugewandten Seite konkav eingemuldet, so dass die Dichtmembrane 16 störungsfrei über den erforderlichen Hubweg des Ventilkegels 3 bewegt werden kann und in der konkaven Einmuldung abgestützt wird. Die Membran weist eine zentrale Ausnehmung auf, durch die der Ventilstößel 5 geführt ist, wobei der Innenrand der Membran um die Ausnehmung mittels zweier Scheiben 20 und einer Mutter 15 an dem Ventilstößel 5 dicht angebracht ist.

Axial etwa in Höhe des Ventilsitzes 1.3 sind in dem umgebenden Umfangsabschnitt der Ventilhaube 2 in dem an das Innengewinde anschließenden Bereich in Umfangsrichtung vorzugsweise äquidistant beabstandet fensterförmige, z.B. rechteckförmige, Ausströmöffnungen 2.1 eingebracht, die beim Abheben des Ventilkegels 3 von dem Ventilsitz 1.3 einen radialen Ausstrom des betreffenden Mediums an die äußere Atmosphäre zulassen. Da das ausströmende Medium durch seine Bestandteile oder bereits durch hohen Druck oder hohe Temperatur Personen gefährden kann, ist um die Ausströmöffnungen 2.1 rundum verlaufend ein Luftleitblech 11 angeordnet, das mittels eines in seinem Durchmesser angepassten zylinderabschnittsförmigen Halteabschnittes 11.1 auf der Außenseite der Ventilhaube 2 festgelegt ist. Zum Festlegen sind in der Außenseite der Ventilhaube 2 Vertiefungen eingebracht, in die in den Halteabschnitt 11.1 eingedrückte Haltewarzen 11.2 eingreifen. Zum einfachen, eindeutigen Positionieren und Festlegen des Luftleitbleches 11 ist der Außendurchmesser der Ventilhaube 2 im Bereich des Halteabschnittes 11.1 verringert, so dass sich ein Anschlagabsatz 2.5 für den Halteabschnitt 11.1 ergibt. Im Bereich der Ausströmöffnungen 2.1 ist das Leitblech 11 von dem Außenumfang der Ventilhaube 2 beabstandet und überragt mit seinem von dem Halteabschnitt 11.1 abgekehrten stirnseitigen Rand in axialer Richtung von dem Ventilstößel 5 weg den (in den Fig.) unteren Rand der Ausströmöffnungen 2.1, so dass ein direkter radialer Ausstrom des Mediums vermieden wird. Ein derartiges Luftleitblech ist insbesondere bei sogenannten F/K/S-Ventilen (Strömungsmedien mit flüssigen, körnigen, staubförmigen Bestandteilen) vorhanden, kann aber auch bei sogenannten DG-Ventilen (Dämpfe, Gase) vorgesehen sein.

Das rändelmutterartige Abschlussteil 8 an dem von dem Ventilgehäuse 1 abgewandten Endabschnitt der Ventilhaube 2 weist einen zentralen Durchbruch auf, der von dem von dem Ventilkegel 3 abgewandten oberen Endabschnitt des Ventilstößels 5 durchragt wird. Auf der von dem Ventilkegel 3 abgelegenen Seite ist in einen Hohlraum des Abschlussstückes 8 ein Anlüftteller 21 eingebracht, der ebenfalls mittels einer zentralen Bohrung auf den Ventilstößel 5 aufgeschoben und mittels eines Sicherungsringes 17 gegen ein Herausschieben aus dem Ventilstößel 5 gesichert ist. Somit wird der Ventilkegel 3 mit dem Ventilstößel 5 beim Herausschrauben des rändelmutterförmigen Abschlussstückes 8 angehoben bzw. ein Anlüften erreicht. Ähnlich ist auch der in den Fig. untere Federteller 6 gegen ein weiteres Verschieben in Richtung des Ventilkegels 3 mittels eines auf den Ventilstößel 5 in einer Ringnut eingesetzten Sicherungsrings 17 gesichert.

Wie aus der Fig. 3 weiter ersichtlich, ist die Dichtung 10 an dem tellerförmigen Ventilkegel 3 mittels eines Hubringes 4 gehalten.

Da die Dichtungsmembran 16 innerhalb der Ventilhaube 2 angeordnet ist, kann diese bei einfacher Montage stabil angebracht werden, ohne dass das Ventilgehäuse 1 diesbezügliche Ausgestaltungen enthalten muss. Auch wird durch diese Anordnung der Dichtmembran 16 erreicht, dass der Ventilsitz 1.3 einfach und gut bearbeitbar am stirnseitigen Rand des Ventilgehäuses 1 ausgebildet werden kann und außerdem die Ausströmöffnungen 2.1 mit einfachen Maßnahmen in der Ventilhaube 2 eingebracht werden können.

## Patentansprüche

1. Sicherheitsventil zum Abbau eines eine vorgegebene Schwelle übersteigenden Überdrucks über mindestens eine zur umgebenden Atmosphäre führende Ausströmöffnung (2.1) mit einem dichtend an einem Überdruckraum anbringbaren, einen Ventilsitz (1.3) aufweisenden Ventilgehäuse (1) und einer mit diesem lösbar mittels eines Gewindes (1.4) und eines Gegengewindes verbundenen Ventilhaube (2), in der ein mit definierter Gegenkraft (7,14) gegen den Ventilsitz (1.3) gedrückter Ventilkegel (3) in einer Axialführung (7,14) verschieblich an einem Führungsglied (5) gehalten ist, wobei das Gewinde (1.4) des Ventilgehäuses (1) an diesem in einem axial von dem Ventilsitz (1.3) in Richtung von dem Ventilkegel (3) weg versetzten Abschnitt angeordnet ist und der Ventilsitz (1.3) den vordersten freien Randbereich des Ventilgehäuses (1) bildet
**dadurch gekennzeichnet,**
**dass** mehrere Ausströmöffnungen (2.1) in der umlaufenden Wandung der Ventilhaube (2) in einem in axialer Richtung bezüglich des Gegengewindes auf der Seite zu dem Ventilkegel (3) anschließenden Bereich der Ventilhaube (2) in Umfangsrichtung versetzt in dem den Ventilsitz (1.3) umgebenden Wandbereich der Ventilhaube (2) eingebracht sind,
**dass** die Ausströmöffnungen (2.1) auf ihrer Außenseite von einem umlaufenden radial beabstandeten Luftleitblech (11) umgeben sind, das mit einem zylindrischen Abschnitt, dessen Innendurchmesser an den Außendurchmesser der Ventilhaube (2) angepasst ist, axial in Richtung von dem Ventilsitz (1.3) weg außerhalb der Ausströmöffnungen (2.1) an der Ventilhaube (2) festgelegt ist, und auf seiner axial abgekehrten Seite außerhalb der Ausströmöffnungen (2.1) einen kreisringförmigen umlaufenden Austrittspalt für das strömende Medium frei lässt, und
**dass** zwischen der Axialführung (7,14) und dem Ventilkegel (3) eine Dichtmembran (16) in dem Hohlraum der Ventilhaube (2) auf der von dem Gegengewinde axial abgewandten Seite der Ausströmöffnungen (2.1) mittels Spannelementen eingespannt ist.

2. Sicherheitsventil nach Anspruch 1,
**dadurch gekennzeichnet,**
**dass** die Ventilhaube (2) aus einem Rohrstück zylindrischen Querschnitts gefertigt ist.

3. Sicherheitsventil nach Anspruch 1 oder 2,
**dadurch gekennzeichnet,**
**dass** in dem Hohlraum der Ventilhaube (2) auf einer Seite der Dichtmembran
(16) einstückig an der Hohlraumwandung oder mittels eines separaten, ortsfest eingesetzten Stückes eine umlaufende ringförmige Klemmfläche (A) gebildet ist, gegen die der Außenrand der Dichtmembrane (16) mittels eines auf deren anderer Seite angeordneten ringförmigen Gegenstückes (13) festgeklemmt ist, wobei zumindest das Gegenstück (13) durch Einschrauben in ein in dem Hohlraum eingebrachtes Gewinde oder durch Abstützung mittels eines elastischen Sicherungsringes (19, 19'), der eine axial gegen den Außenrand der Dichtmembrane (16) gerichtete Spannung bewirkt und in eine in die Hohlraumwandung eingearbeitete Ringnut (2.3, 2.3') eingesetzt ist, gegen den Außenrand der Dichtmembrane (16) verspannt ist, welche mit einem ringförmigen Innenrand mit dem als Ventilstößel (5) ausgebildeten Führungsglied oder mit dem Ventilkegel (3) dicht verbunden ist.

4. Sicherheitsventil nach Anspruch 3,
**dadurch gekennzeichnet,**
**dass** das eingesetzte Stück einen auf der von dem Ventilkegel (3) abgewandten Seite der Dichtmembran (16) angeordneten Membranteller (14) bildet.

5. Sicherheitsventil nach Anspruch 3 oder 4,
**dadurch gekennzeichnet,**
**dass** eine die Gegenkraft erzeugende Schraubenfeder (18) auf einem auf der von dem Ventilkegel (3) abgewandten Seite des eingesetzten Stücks in dem Hohlraum in axialer Richtung beweglich angeordneten separaten Federteller (6) abgestützt ist, der mit dem Führungsglied axial unverschieblich verbunden ist, und
**dass** die Schraubenfeder (18) mit ihrem von dem Ventilkegel (3) abgewandten Ende an einem in dem Hohlraum der Ventilhaube (2) ortsfest angeordneten weiteren Federteller (7) abgestützt ist.

## Claims

1. Safety valve for reducing excess pressure exceeding a preset threshold via at least one outflow opening (2.1) that leads to the surrounding atmosphere, said safety valve having a valve housing (1), which is attachable in a sealing manner to an excess pressure chamber and has a valve seat (1.3), and a valve hood (2), which is connected to said valve housing in a detachable manner by means of a thread (1.4) and a counter thread, in which valve hood a valve face (3), which is pressed at a defined counterforce against the valve seat (1.3), is retained in an axial guide (7, 14) so as to be displaceable on a guide member (5), wherein the thread (1.4) of the valve housing (1) on said valve housing is disposed in a portion offset axially from the valve seat (1.3) in the direction away from the valve face (3) and the valve seat (1.3) forms the foremost free edge region of the valve housing (1), **characterized in that**
a plurality of outflow openings (2.1) are provided in the circumferential wall of the valve hood (2) in a region of the valve hood (2), which connects in an axial direction with reference to the counter thread on the side towards the valve face (3), offset in the circumferential direction in the wall region of the valve hood (2) surrounding the valve seat (1.3),
**in that** the outflow openings (2.1) are surrounded at their outside at a radial spacing by a circumferential air deflector (11), which is secured by means of a cylindrical section, the inside diameter of which is adapted to the outside diameter of the valve hood (2), to the valve hood (2) in an axial manner in the direction away from the valve seat (1.3) outside the outflow openings (2.1), and on its axially remote side outside the outflow openings (2.1) leaves free a circular ring-shaped circumferential outlet gap for the flowing medium, and
**in that** between the axial guide (7, 14) and the valve face (3) a sealing diaphragm (16) is clamped in the hollow space of the valve hood (2) on the side of the outflow openings (2.1) axially remote from the counter thread by means of clamping members.

2. Safety valve according to Claim 1, **characterized in that** the valve hood (2) is produced from a pipe section with a cylindrical cross-section.

3. Safety valve according to Claim 1 or 2, **characterized in that** in the hollow space of the valve hood (2) on one side of the sealing diaphragm (16), integrally on the hollow space wall or by means of a separate, fixedly inserted piece, a circumferential ring-shaped clamping face (A) is formed, against which the outside edge of the sealing diaphragm (16) is clamped by means of a ring-shaped counter piece (13) that is disposed on the other side, wherein, through screw-connection into a thread provided in the hollow space or through support by means of a resilient retaining ring (19, 19'), which brings about a clamping effect directed axially against the outside edge of the sealing diaphragm (16) and is inserted into an annular groove (2.3, 2.3') admitted into the hollow space wall, at least the counter piece (13) is braced against the outside edge of the sealing diaphragm (16), which is sealingly connected by means of a ring-shaped inside edge to the guide member that is realized in the form of valve plunger (5) or to the valve face (3).

4. Safety valve according to Claim 3, **characterized in that** the inserted piece forms a diaphragm disc (14) that is disposed on the side of the sealing diaphragm (16) remote from the valve face (3).

5. Safety valve according to Claim 3 or 4, **characterized in that** a helical spring (18) that generates the counterforce is supported on a separate spring plate (6) that is disposed on the side of the inserted piece remote from the valve face (3) in the hollow cavity so as to be displaceable in the axial direction, said spring plate being connected to the guide member so as to be non displaceable in an axial manner, and
**in that** the helical spring (18) is supported by means of its end remote from the valve face (3) on a further spring plate (7) that is disposed in a fixed manner in the hollow space of the valve hood (2).

## Revendications

1. Soupape de sûreté pour supprimer une surpression excédant un seuil préétabli, par l'intermédiaire d'au moins un orifice de sortie (2.1) gagnant l'atmosphère environnante, comprenant un carter (1) muni d'un siège d'obturation (1.3) et pouvant être implanté de manière étanche sur une chambre de surpression, et un capuchon (2) qui est relié amoviblement audit carter au moyen d'un filetage (1.4) et d'un filetage complémentaire, et dans lequel un cône obturateur (3), pressé contre le siège d'obturation (1.3) avec une force antagoniste bien définie, est retenu à coulissement sur un organe de guidage (5), dans un guide axial, sachant que le filetage (1.4) du carter (1) de la soupape est façonné, sur ce dernier, dans une région axialement décalée du siège d'obturation (1.3), en s'éloignant dudit cône obturateur (3), et que ledit siège d'obturation (1.3) matérialise la zone marginale libre la plus avancée du carter (1) de la soupape,
**caractérisée par le fait**
**que** plusieurs orifices de sortie (2.1) sont pratiqués dans la paroi circonférentielle du capuchon (2) de la soupape, dans une zone dudit capuchon (2) occupant une position adjacente dans la direction axiale vis-à-vis du filetage complémentaire, du côté proche du cône d'obturation (3), avec décalage périphérique dans la zone de paroi dudit capuchon (2) qui entoure le siège d'obturation (1.3) ;
**que** lesdits orifices de sortie (2.1) sont entourés, sur leur face extérieure, par une tôle circonférentielle de guidage d'air (11) qui est espacée radialement; est implantée rigidement sur le capuchon (2) de la soupape à l'extérieur desdits orifices de sortie (2.1), en s'éloignant axialement du siège d'obturation (1.3), par une région cylindrique dont le diamètre intérieur est adapté au diamètre extérieur dudit capuchon (2) ; et qui réserve sur son côté tourné axialement à l'opposé, à l'extérieur desdits orifices de sortie (2.1), un interstice circonférentiel de sortie, en forme d'anneau circulaire, destiné au fluide en circulation ; et
**qu'**une membrane d'étanchement (16) est enserrée dans la cavité dudit capuchon (2) de la soupape au moyen d'éléments de serrage, entre le guide axial (7, 14) et le cône obturateur (3), du côté desdits orifices de sortie (2.1) qui est tourné axialement à l'opposé dudit filetage complémentaire.

2. Soupape de sûreté selon la revendication 1,
**caractérisée par le fait**
**que** le capuchon (2) de ladite soupape est constitué d'une pièce tubulaire de section transversale cylindrique.

3. Soupape de sûreté selon la revendication 1 ou 2,
**caractérisée par le fait**
**que** la cavité du capuchon (2) de ladite soupape présente, d'un côté de la membrane d'étanchement (16), une surface annulaire circonférentielle de coincement (A) qui fait corps avec la paroi de ladite cavité, d'un seul tenant ou au moyen d'une pièce distincte intégrée de manière fixe, et contre laquelle le bord extérieur de ladite membrane d'étanchement (16) est coincé fermement au moyen d'une pièce complémentaire (13) annulaire et disposée de l'autre côté de ladite membrane, sachant qu'au moins ladite pièce complémentaire (13) est serrée, par vissage dans un filetage pratiqué dans la cavité, ou bien par appui procuré au moyen d'une bague élastique d'arrêt (19, 19') exerçant une tension dirigée axialement vers le bord extérieur de la membrane d'étanchement (16) et logée dans une rainure annulaire (2.3, 2.3') façonnée dans la paroi de ladite cavité, contre ledit bord extérieur de ladite membrane d'étanchement (16) qui est reliée de manière étanche, par un bord intérieur annulaire, au cône obturateur (3) ou à l'organe de guidage réalisé sous la forme d'un coulisseau d'obturation (5).

4. Soupape de sûreté selon la revendication 3,
**caractérisée par le fait**
**que** la pièce intégrée matérialise un disque (14) situé du côté de la membrane d'étanchement (16) qui est tourné à l'opposé du cône obturateur (3).

5. Soupape de sûreté selon la revendication 3 ou 4,
**caractérisée par le fait**
**qu'**un ressort hélicoïdal (18), développant la force antagoniste, est en appui contre une rondelle distincte (6) qui est logée avec mobilité axiale dans la cavité, du côté de la pièce intégrée tourné à l'opposé du cône obturateur (3), et est reliée à l'organe de guidage sans faculté de coulissement axial ; et
**que** ledit ressort hélicoïdal (18) prend appui, par son extrémité tournée à l'opposé dudit cône obturateur (3), contre une rondelle supplémentaire (7) occupant une position fixe dans la cavité du capuchon (2) de ladite soupape.
